# EUROPEAN PATENT APPLICATION

(11) **EP 2 886 987 A1**
(43) Date of publication of application: **24.06.2015**
(21) Application number: 14460037.6
(22) Date of filing: 16.07.2014
(51) Int. Cl.: F27B 9/24, F27B 9/38, F27B 9/39, F27B 9/40, F27D 3/00, F27D 19/00

(54) **AN ENERGY-SAVING CHARGE TRANSPORT SYSTEM IN A PRESS-FURNACE LINE**

(30) Priority: 23.12.2013 PL 40664013
(71) Applicant: Politechnika Krakowska im. Tadeusza Kosciuszki, 31-155 Krakow (PL)
(72) Inventor: Moszumañski, Ryszard, 31-872 Kraków (PL); Knapik, S?awomir, 32-065 (PL); Kryza, Jerzy, 30-147 Kraków (PL); Tabor, Adam, 30-629 Kraków (PL)

(57) **Abstract**

The subject of the present invention is an energy-saving charge transport system in the press-furnace line with recovery of heat energy and recovery of electric energy. Its objective consists in introducing a rational management of heat energy and electric energy in the charge transport system along the press-furnace route and by means of a well-thought-out arrangement of transport routes and charging elevators, achieving compact dimensions of the whole transport structure. The essence of the energy-saving charge transport system in the press-furnace line is the heat energy recovery in the area surrounding the furnace and recovery of electric energy used to drive transport elevators. Elevator (1) loaded with hot charge (3) moves downwards. Motor (5) acting as an electric current generator brakes motion of elevator (1) and via controller (7) supplies electric energy back to battery (8); when motor (6) lifts elevator (2) loaded with cold charge (4), then, in large measure, it uses the energy stored in battery (8). The energy-saving charge transport system in the press-furnace line may find wide application in industries where consumption of energy in the course of technological process is a significant issue.

## Description

The subject of the present invention is an energy-saving charge transport system in a press-furnace line with recovery of heat energy and recovery of electric energy. Commonly known and applied systems for transporting charge between the moulding press and the furnace, where transport of the charge within the furnace area is connected with the need to position transport pallets carrying the charge before introducing them into furnace and receive transport pallets with charge after thermal treatment, require the use of long transport trains in view of large dimensions of typical tunnel furnace and feeding devices. They require also cooling the processed charge (after thermal treatment) down to the ambient temperature before introducing the finished product to the warehousing area.

An important flaw of currently used transport systems consists in wasting the energy released when transport elevators carrying pallets loaded with charge move downwards. To raise transport elevators loaded with pallets carrying the charge up to the furnace charging position, another portion of energy is used. On the furnace side, the raw charge needs to be heated from the ambient temperature, and the processes charge after completion of the heat treatment cycle must be cooled down to ambient temperature before introducing to the warehousing area. The heat energy released from such cooled charge is also irretrievably and entirely lost.

The objective of the invention consists in introducing a rational management of heat energy and electric energy in the charge transport system along the press-furnace route and in the area surrounding the furnace and by means of a well-thought-out arrangement of transport routes and charging elevators, achieving compact dimensions of the whole transport structure.

The essence of the energy-saving charge transport system in the press-furnace line consists in that the elevator loaded with hot charge moves downwards, whereas the motor, acting as an electric current generator, brakes motion of the elevator and supplies electric energy via a controller back to the battery, and in the course of rising the elevator with cold charge, the motor uses energy stored in the battery. The transport pallet with openings carries favourably a hot baked charge, while another pallet also provided with openings carries raw cold charge and heated air flows upwards and heats up the charge, whereas a cylindrical shield concentrates hot air around the cold charge and prevents the heat from dispersing. It is also favourable that articles to be baked are arranged on empty transport pallets in two trains, whereas the actuator cyclically pushes pallets with the product to be baked arranged in the train and delivers them onto the upper level of the heat recovery tunnel, transport pallets with the charge are delivered, one after the other, to the elevator that delivers transport pallets with the charge onto the level of left-hand track; next, an actuator positions the pallet with charge along the heat recovery tunnel, and then the actuator moves pallets with hot charge along the heat recovery tunnel as far as to the pallet unloading station, whereas in the pallet unloading station the finished product is taken off the pallet and directed to the finished product storage area, after which empty pallets are returned to the press. It is further favourable that the actuator pushes cyclically pallets carrying the product to be baked arranged in a train and delivers them onto the upper level of the heat recovery tunnel, while transport pallets with charge are delivered, one by one, to the elevator that delivers transport pallets onto the right-hand track level, and then an actuator places them in the furnace on the right-hand track, whereas after covering the whole length of the right-hand track, the pallets carrying the charge are delivered to an elevator that transports the pallet with charge onto the lower level of the heat recovery tunnel; next, an actuator positions the pallet with charge along the axis of the heat recovery tunnel and another actuator moves pallets with hot charge along the heat recovery tunnel as far as to the pallet unloading station, where the finished product is taken off the pallet and directed to the finished product storage area, while the empty transport pallet is returned to press.

In the space under furnace, convection heat exchange occurs between the hot charge leaving the furnace and the raw charge only just delivered for baking. High effectiveness of such heat exchange is obtained thanks to application of transport pallets fabricated with the use of the invention entitled "A new transport pallet for tunnel pusher-type furnace" applied for patent protection by the Cracow University of Technology.

The merit of the present invention consist in that the transport system manages the energy in a rational way in all areas of operation. The waste heat coming from the charge already baked is taken over and reused. The heat is used for preliminary heating the raw charge. Simultaneously with preliminary heating of the raw charge, the process occurs of preliminary cooling of the finished product that is further directed to the finished product storage area. Electric drives of transport elevators operate in a system allowing to recover electric energy from braking.

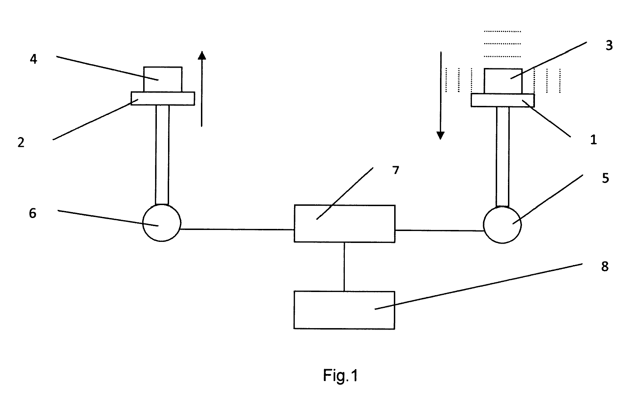

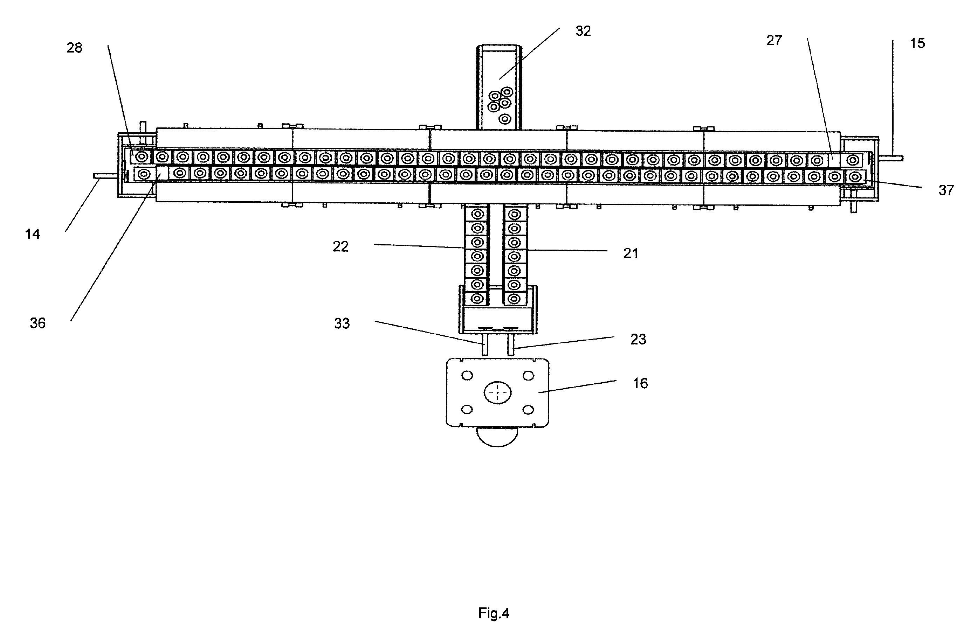

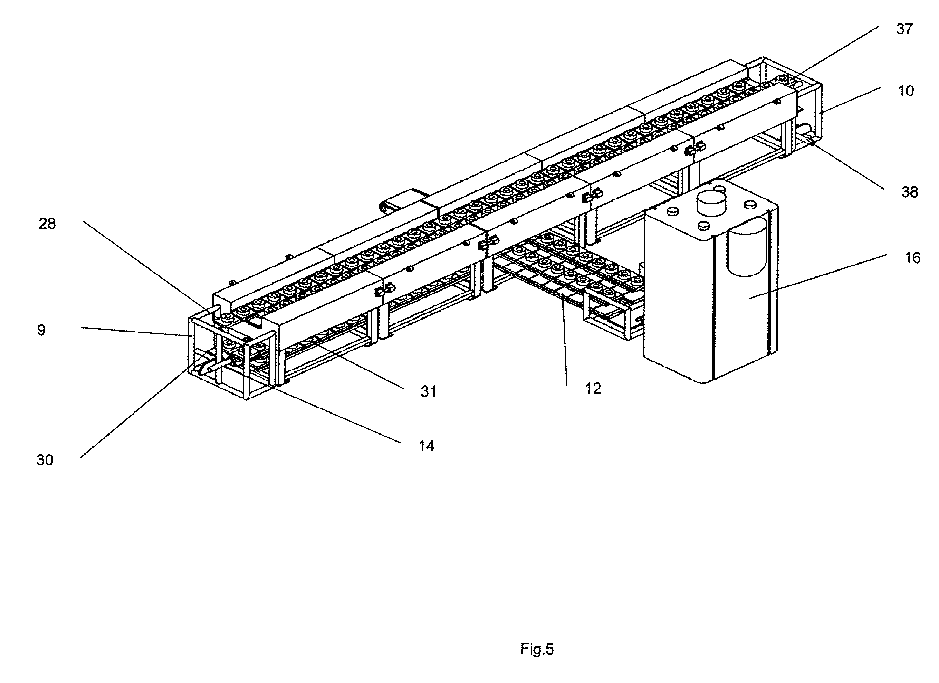

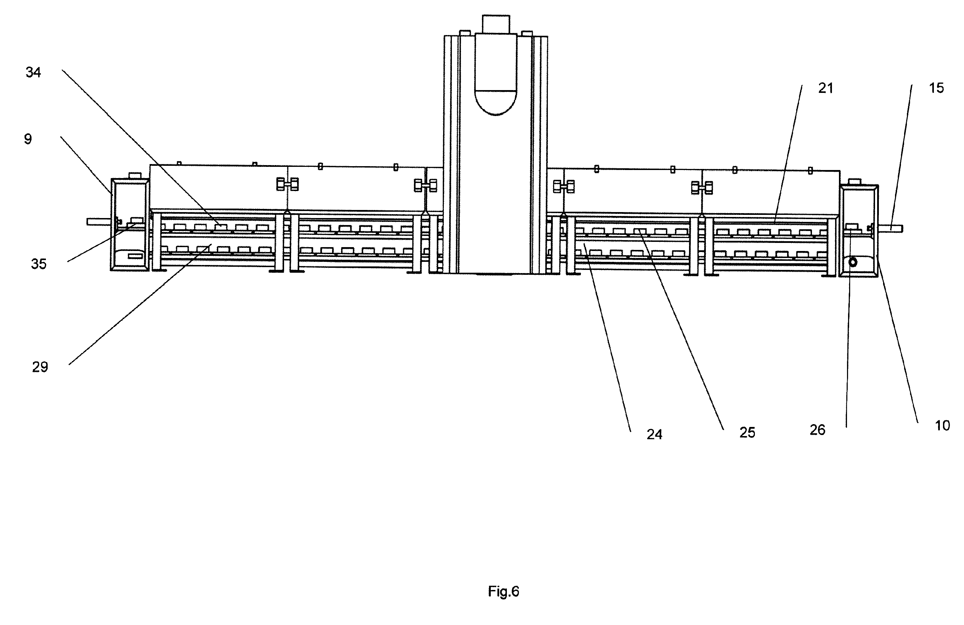

The invention is illustrated by means example embodiments shown in Fig. 1, Fig. 2, Fig. 3, Fig. 4, Fig. 5, Fig. 6, and Fig. 7. The principle of operation of transport elevators in a system allowing to recover electric energy from braking is presented in Fig. 1.

Elevator (1) loaded with hot charge (3) moves downwards. Motor (5), acting as an electric current generator, brakes motion of elevator (1) and via controller (7) supplies electric energy back to battery (8); if motor (6) raises elevator (2) loaded with cold charge (4), it uses, in large measure, the energy accumulated in battery (8).

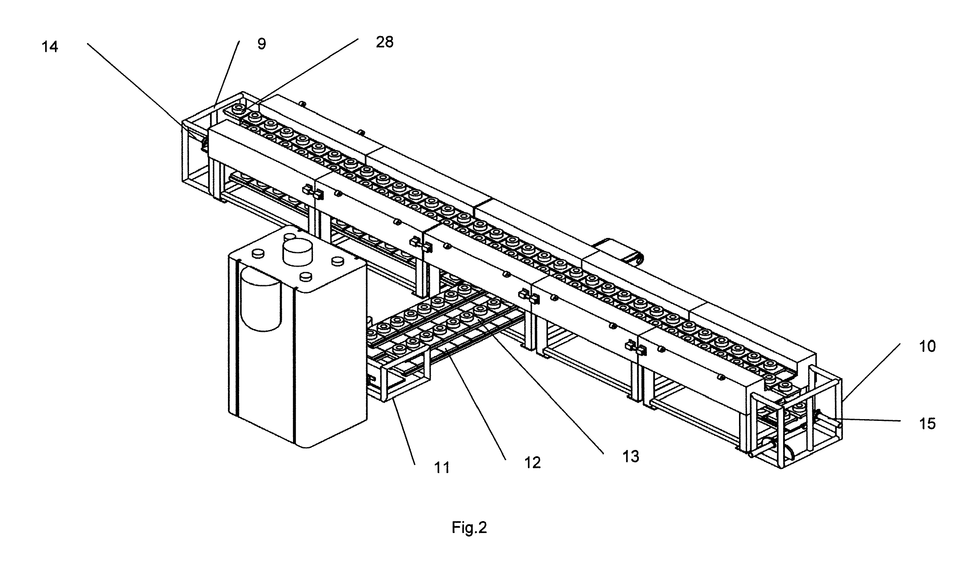

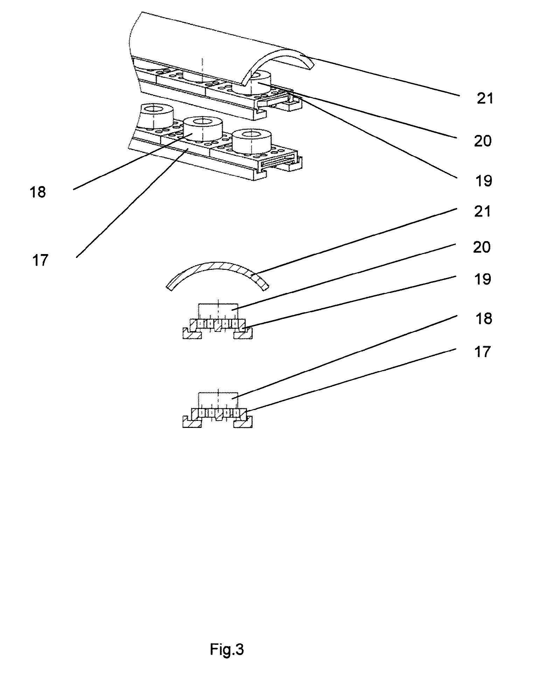

In the example embodiment of the present invention implemented in a tunnel backward-motion push furnace presented in Fig. 2, three transport elevator units are employed: elevator (9) on the right-hand-side of the furnace equipped with actuator (14) activating the pushing cycle of the right-hand track; elevator (10) on the right-hand-side of the furnace equipped with actuator (15) activating the pushing cycle of the left-hand track; and elevator (11) delivering empty transport pallets (12) to the press (16) and receiving pallets with articles (13) to be baked. The principle of operation of the heat recovery tunnel is presented in Fig. 3.

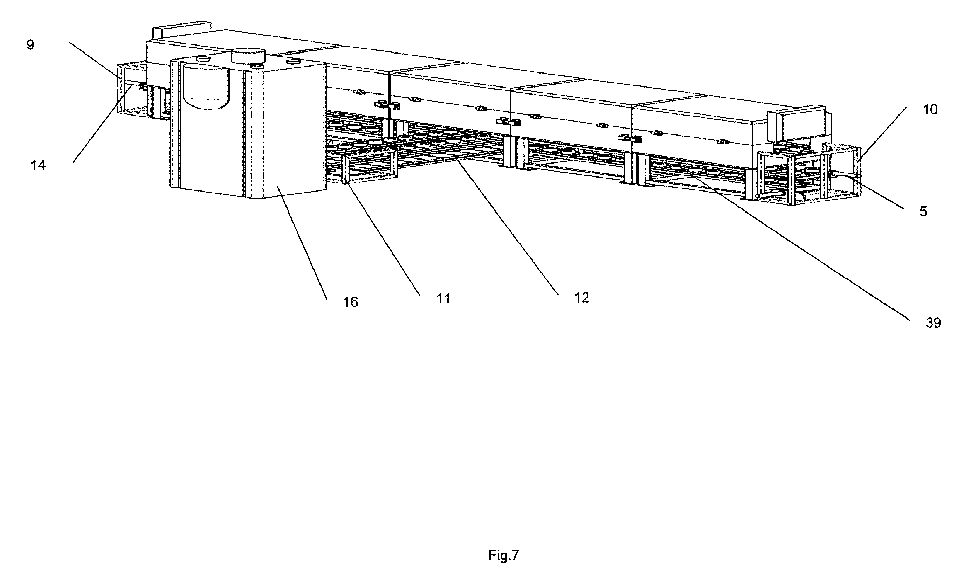

The transport pallet provided with openings (17) carries a hot baked charge (18). The transport pallet with openings (19) is loaded with raw cold charge (20). Heated air flows upwards and heats up the charge (20). Cylindrical shield (21) concentrates said hot air around cold charge (20) and prevents heat from dispersing. Articles to be baked are arranged on empty transport pallets (12) in two trains (21) and (22). Actuator (23) cyclically pushes pallets loaded with the article to be baked located in train (21) and supplies them onto the upper level of the heat recovery tunnel (24), whereas transport pallets with charge (25) are supplied, one after another, to elevator (10). Elevator (10) delivers the transport pallets with charge (26) onto the left train level, and then actuator (15) places them in the furnace on the left-hand track (27). After covering the whole length of the left-hand track (27), pallets with charge (28) are delivered to elevator (9). Elevator (9) transports the pallet with charge (28) onto the lower level of the heat recovery tunnel (29); next, actuator (30) positions the pallet with charge along the axis of the heat recovery tunnel (29), and finally actuator (14) moves pallets with hot charge (31) along the heat recovery tunnel (29) right to the pallet unloading station. In the pallet unloading station, finished product is taken off the pallet and delivered to the finished product storage area (32), whereas empty transport pallets (12) come back to press (16). Actuator (33) cyclically pushes pallets with the product to be baked arranged in the train (22) and delivers them onto the upper level of the heat recovery tunnel (29), transport pallets with charge (34) are delivered, one after another, to elevator (9), and elevator (9) delivers transport pallets with charge (35) onto the right-hand track level, after which actuator (14) locates them on the right-hand track (36). After covering the whole length of the right-hand track (36), pallets with charge (37) are delivered to elevator (10). Elevator (10) delivers pallets with charge (37) onto the lower level of the heat recovery tunnel (24). Next, actuator (30) positions the pallets with charge along the axis of the heat recovery tunnel (24), and actuator (15) moves pallets with hot charge (39) along the heat recovery tunnel (24) as far as to the pallet unloading station. In the pallet unloading station, the finished product is taken off the pallets and directed to the finished product storage area (32), while empty transport pallets (12) are returned to the press (16). Fig. 7 presents a complete energy-saving charge transport system in the press-furnace line with recovery of electric energy and recovery of heat energy employed in a "press - tunnel backward push furnace - finished product storage area" system. The energy-saving charge transport system in the press-furnace line may find wide application in industries where consumption of energy in the course of technological process is a significant issue.

## Claims

1. An energy-saving charge transport system in the press-furnace line **characterised in that** elevator (1) loaded with hot charge (3) moves downwards, while electric motor (5), acting as an electric current generator, brakes motion of elevator (1) and via controller (7) supplies electric energy back to battery (8), and when the elevator (2) moves upwards with cold charge (4), motor (6) uses electric energy stored in battery (8).

2. The energy-saving charge transport system in the press-furnace line according to claim 1 **characterised in that** a transport pallet with openings (17) is loaded with hot baked charge (18) while a transport pallet (19) with openings is loaded with raw cold charge (20) and heated air flows up and heats up the charge (20), whereas a cylindrical shell (21) concentrates the hot air around the cold charge (20) and prevents the heat from dispersing.

3. The energy-saving charge transport system in the press-furnace line according to claims 1 and 2 **characterised in that** that articles to be baked are arranged on empty transport pallets (12) in two trains (21) and (22), whereas actuator (23) cyclically pushes pallets with the product to be baked arranged in the train (21) and delivers them onto the upper level of the heat recovery tunnel (24), transport pallets with charge (25) are delivered, one after the other, to elevator (10), that delivers transport pallets with charge (26) onto the level of left-hand track, after which actuator (15) positions them in the furnace on left track (27), and after covering the whole length of left track (27), pallets with charge (28) are delivered to elevator (9), whereas elevator (9) transports the pallet with charge (28) onto the lower level of the heat recovery tunnel (29); next, an actuator (30) positions the pallet with charge along the axis of the heat recovery tunnel (29), and further actuator (14) moves pallets with hot charge (31) along the heat recovery tunnel (29) as far as to the pallet unloading station, while in the pallet unloading station, the finished product is taken off the pallets and directed to the finished product storage area (32), after which empty transport pallets (12) are returned to press (16).

4. The energy-saving charge transport system in the press-furnace line according to claims 1, 2, and 3 **characterised in that** actuator (33) cyclically pushes pallets with the product to be baked arranged in the train (22) and delivers them onto the upper level of the heat recovery tunnel (29), whereas transport pallets with charge (34) are delivered, one after another, to elevator (9) that delivers transport pallets with charge (35) onto the right-hand track level, and then actuator (14) locates them on the right-hand track (36), whereas after covering the whole length of the right-hand track (36), pallets with charge (37) are delivered to elevator (10) that transports pallets with charge (37) onto the lower level of the heat recovery tunnel (24); further, actuator (30) positions the pallets with charge along the axis of the heat recovery tunnel (24) and actuator (15) moves pallets with hot charge (39) along the heat recovery tunnel (24), as far as to the pallet unloading station where the finished product is taken off the pallets and directed to the finished product storage area (32), while empty transport pallets (12) are returned to press (16).
